# NEUE EUROPÄISCHE PATENTSCHRIFT

(11) **EP 0 646 213 B2**
(45) Veröffentlichungstag und Bekanntmachung des Hinweises auf die Entscheidung über den Einspruch: **26.02.2003**
(45) Hinweis auf die Patenterteilung: 22.07.1998
(21) Anmeldenummer: 94915086.6
(22) Anmeldetag: 21.04.1994
(51) Int. Cl.: E21B 43/10, E21B 43/04, E21B 7/20, E21B 43/08

(54) **VERFAHREN UND VORRICHTUNG ZUM VERLEGEN VON UNTERIRDISCHEN SAMMELLEITUNGEN FÜR FLÜSSIGKEITEN UND GASE**
PROCESS AND TOOL FOR LAYING UNDERGROUND COLLECTOR MAINS FOR LIQUIDS AND GASES
PROCEDE ET OUTIL DE POSE DE COLLECTEURS SOUTERRAINS DE LIQUIDES ET DE GAZ

(30) Priorität: 22.04.1993 DE 4313221
(43) Veröffentlichungstag der Anmeldung: 05.04.1995
(73) Patentinhaber: FLOWTEX SERVICE GMBH & CO. KG, D-76275 Ettlingen (DE); Schumacher Umwelt- und Trenntechnik GmbH, D-74564 Crailsheim (DE); Universität Karlsruhe(TH), D-76128 Karlsruhe (DE)
(72) Erfinder: SASS, Ingo, D-76227 Karlsruhe (DE); BAYER, Hans-Joachim, D-76275 Ettlingen (DE); KLEISER, Klaus, D-76297 Stutensee-Büchig (DE); GÄNGER, Jörg, D-75334 Straubenhardt (DE)
(74) Vertreter: HOFFMANN EITLE
(86) Internationale Anmeldenummer: EP9401248
(87) Internationale Veröffentlichungsnummer: WO94024414

(56) Entgegenhaltungen:
- US-A- 2 335 558
- US-A- 2 827 264
- US-A- 2 950 087
- US-A- 2 981 332
- US-A- 3 357 564
- US-A- 3 378 076
- US-A- 3 534 816
- US-A- 3 907 033
- US-A- 4 003 440
- US-A- 4 117 895
- US-A- 5 040 601
- US-A- 5 123 492
- bbr ; Wasser und Rohrbau ; Heft 3, März bbr ; Wasser und Rohrbau ; Heft 3, März 1990 ; 41 Jahrgang, S. 119-125 1990 ; 41 Jahrgang, S. 119-125

## Beschreibung

Die Erfindung betrifft ein Verfahren zum Verlegen von unterirdischen Sammelleitungen für Flüssigkeiten und Gase, insbesondere zum Bau von Horizontalfilterbrunnen und Drainageleitungen.

Der Bau von horizontalen, bogenförmigen, schrägen oder gewundenen Brunnen und Drainageleitungen sowohl für Grund- und Stauwasser als auch für Bodenluft, wird zusammengefaßt mit der Bezeichnung Horizontalfilterbrunnenbau versehen. Herkömmliche Horizontalfilterbrunnen dienen zur Entnahme von Grundwasser, das durch horizontal verlegte Filterrohre in einen vertikalen Hauptschacht geleitet wird. Von dort wird das Wasser mittels Pumpen an die Oberfläche gebracht. Auch in Gebieten der Altlastensanierung und -sicherung ist zum Schadstoffentzug diese Art von Brunnen einsetzbar. Solche Horizontalfilterbrunnen haben gegenüber Vertikalbrunnen verfahrenstechnische und unter bestimmten Voraussetzungen wirtschaftliche Vorteile.

Mit einem Horizontalfilterbrunnen kann die grundwasserführende Bodenschicnt mit größerer Brunnenleistung entsprechend ihrer Ergiebigkeit erfasst werden. Des weiteren verockern Horizontalfilterbrunnen bedeutend langsamer als Vertikalbrunnen, weil die horizontal gelagerten Filterrohre nicht mit der Luft in Berührung kommen und die Strömungsgeschwindigkeiten in horizontalen Wassererfassungen sehr niedrig gehalten werden können.

Als weiterer Vorteil ist herauszustellen, daß die maschinellen und rohrtechnischen Anlagen für Pumpendruckleitungen, Meßgeräte und Energiezuführungen mit elektrischen Schalt- und Steuereinrichtungen weitaus geringeren Umfang erfordern als bei Vertikalbrunnen. Ebenso ist die Überwachung und Wartung eines Horizontalfilterbrunnens, gemessen an vergleichbaren Vertikalbrunnenanlagen, nicht so aufwendig.

Horizontalfilterbrunnen sind neben der Wassergewinnung prinzipiell dort bevorzugt einsetzbar, wo relativ flache Wasservorkommen saniert werden müssen, oder in stark geschichteten Böden, wo eine bestimmte Schicht zur Bodenluftsanierung erschlossen werden muß. Auch in Gebieten, die eine Überbauung aufweisen oder wo eine anderweitige Nutzung den Bau von Vertikalbrunnen nicht zuläßt, oder wo hydraulische Notwendigkeiten vorliegen, die einen Horizontalfilterbrunnenbau nahelegen, werden bevorzugt Horizontalfilterbrunnen eingesetzt.

Heutzutage werden bei Horizontalfilterbrunnen hauptsächlich die Verfahren nach FEHLMANN und PREUSSAG angewendet. Die Verfahren nach FEHLMANN und PREUSSAG sind bei E. Bieske, "Bohrbrunnen" (7. Aufl., 1992, Oldenbourg, München) beschrieben. Des weiteren gibt die Firma Preussag ein Prospekt heraus, in dem das Preussag-Verfahren ausführlich dargestellt ist. Die Vorgehensweise soll am Beispiel des Preussag-Verfahrens kurz erläutert werden: Bei diesem Verfahren wird ein bis in das Grundwasservorkommen reichender Hauptschacht vorher angefertigt und abgetäuft. Von einer Arbeitsebene aus werden strahl- oder fächerförmig gerade horizontale Bohrungen mit Bohrrohren vorangetrieben. In diese Bohrrohre werden danach die Filterrohre eingebaut. Dann werden die Bohrrohre nach und nach aus den Bohrungen herausgezogen, währenddessen Filterkies in den Hohlraum zwischen der Bohrung und dem Filterrohr unter Hochdruck angespült wird, so daß der Filterkies sich zwischen Bohrwandung und Filterrohr absetzen kann. Dieser Filtermantel kann aus Filterkies oder Filtersand bestehen.

Diese bekannten Verfahren haben den Nachteil, daß ein im Durchmesser mindestens 2,5 m breiter Vertikalschacht in den Boden vorangetrieben werden muß. Des weiteren muß dann eine Arbeitsbühne mit der Bohrund Einbauanlage im Schacht aufgebaut und mit großem Aufwand die Horizontalbohrungen in die Bodenschichten eingebracht werden.

Die Horizontalbohrungen bei diesen Verfahren können nur eine begrenzte Länge bis etwa 60 m erreichen, und dies nur in gerader Streckenführung. Die möglichen Bohrlängen werden dabei durch die Bodeneigenschaften bestimmt.

Zudem strömt während der gesamten Bauzeit des Horizontalfilterbrunnens bei den bekannten Verfahren ständig Grundwasser in den Zentralschacht ein, das mit großem Aufwand entweder abgehalten oder abgepumpt werden muß.

Diese bekannten Verfahren sind somit aufwendig, teuer und können nur ab bestimmten Baugrößen wirtschaftlich gebaut werden.

Die US 2,981,332 beschreibt ein in eine vertikal ausgerichtete Bohrung einsetzbares Filterelement, das ein äußeres Hüllrohr und ein inneres Rohr umfaßt. Zwischen dem inneren Filterrohr und dem äußeren Hüllrohr wird eine Filterschicht bestehend aus Fiberglas angeordnet. Nach dem Einsetzen des Filterelements in eine Vertikalbohrung wird das äußere Hüllrohr herausgezogen, woraufhin sich die Fiberglasschicht zwischen Filterrohr und äußerem Hüllrohr ausdehnt und sich dicht an die Wandungen der Bohrung anlegt. Das Filterelement wird aufgrund der vertikalen Bohrung nicht in diese eingezogen, sondern in diese eingesetzt oder eingedrückt.

Der Fachaufsatz in der bbr, Wasser und Rohrbau, Heft 3, März 1990, S. 119-125 beschreibt die Verlegung von Versorgungsleitungen. Hierbei wird die steuerbare Horizontalbohrtechnik im Bereich der Energievorsorgung eingesetzt. Es wird zunächst eine Pilotbohrung hergestellt. Um das Bohrloch aufzuweiten, das Pilotbohrgestänge zu entlasten und zu stabilisieren, wird anschließend ein Überwaschrohr eingebracht, indem man es drehend über das Pilotbohrgestänge schiebt. Die Bohrung erstreckt sich zwischen einer Eintrittsöffnung und einer Austrittsöffnung. An der Austrittsöffnung als Zielpunkt der Bohrung wird ein Vorräumer an das Überwaschrohr montiert und mit dem Überwaschrohr durch die Bohrung zurückgezogen. Anschließend wird ein Dükerstrang in die Bohrung eingezogen. Als Bohrspülung wird eine Wasser-/Bentonitmischung verwendet, die nach dem Einziehen des Dükerstranges im Ringraum zwischen der Bohrung und dem Dükerstrang verbleibt und den Dükerstrang durch ihr thixotropes Verhalten vor Beschädigungen schützt.

Aufgabe der vorliegenden Erfindung ist es, ein vollkommen neues Verfahren zu entwickeln, das ein einfaches und schnell durchzuführendes Einbringen von unterirdischen Horizontalfilterbrunnen und Drainageleitungen ermöglicht.

Diese Aufgabe wird mit einer Verfahrensweise nach dem Patentanspruch 1 gelöst.

Der Erfindung liegt der Gedanke zugrunde, die erforderlichen Horizontalbohrungen von der Oberfläche aus (z.B. schachtlos in ebenem Gelände) vorzunehmen und in diese Bohrungen den schon gesamt vorgefertigten Filterleitungsaufbau mit geeigneten Filterrohren und einem Filterkiesmantel, den sogenannten Filterstrang, von der Oberfläche aus in die Bohrungen einzubringen. Dabei wird hier unter einem Filterstrang ein ein- oder mehrteiliges inneres Filterrohr mit umgebendem einoder mehrteiligem Kiesmantel verstanden.

Zum Einbringen der Bohrung wird vorteilhafterweise ein voll verlaufsgesteuertes Bohrungsverfahren verwendet, das ursprünglich für die Versorgungstechnik entwickelt wurde.

Dabei wird ein voll steuerbarer, fernlenkbarer Bohrkopf eingesetzt, der es ermöglicht, daß auch gekrümmte oder bogenförmig verlaufende Bohrungen vorgenommen werden können. Ein solches verlaufsgesteuertes Bohrverfahren hat für den Bau von Horizontalfilterbrunnen den Vorteil, daß die Verdichtungen des Bodens sich bei den meisten Bodenarten in einem Bereich halten, der für den Bodenluft-, Stauwasser- oder Grundwasserbrunnenbau tolerierbar ist.

Beim Bohren schneidet unter mechanischem Vorschub ein Hochdruckwasserstrahl einen Mikrotunnel in den Boden. Vorteilhafterweise wird diesem Hochdruckwasserstrahl eine Stützsuspension für das Bohrloch beigemischt, wodurch ein Teil des gelösten Bodenmaterials in die umgebende Matrix verdrängt und ein Teil mit der Bohrsuspension ausgetragen wird. Dadurch wird einerseits das Bohrloch stabilisiert und andererseits eine gewisse Gleitwirkung beim Einzug einer Filterstrang-Einzieheinheit, je nach Zusammensetzung der Bohrspülung, erzeugt. Unter einer Filterstrang-Einzieheinheit wird hier des Arbeitsmittel zur Durchführung des Verfahrens nach dem Patentanspruch 20 oder 21 verstanden. Infolge der Materialverlagerungen treten geringe Permeabilitätsänderungen auf, die durch die Art und Weise des Bohrens im Detail und durch Spülungsmenge, Spülungsdruck und Spülungszusammensetzung reguliert werden.Des weiteren kann es den Bohrerhältnissen entsprechend von besonderem Vorteil sein, eine bentonit-freie Bohrsuspension zu verwenden, die gewässerneutral und biologisch abbaubar ist. Diese Bohrsuspension ermöglicht es, daß keine zusätzlichen Permeabilitätsverringungen des Bodens erzeugt werden.

Um Filterstrang-Einzieheinheiten mit einem Durchmesser größer als der des Mikrotunnels in die Bohrung einzubringen, ist es nötig die erste Bohrung mit kleinem Durchmesser durch einen Aufweitkopf aufzuweiten. Hierzu wird der Bohrkopf nach Austritt aus der Austrittsöffnung der Bohrung durch den Aufweitkopf ausgetauscht und dieser dann durch die Pilot-Bohrung bzw. den Mikrotunnel in hydraulisch-mechanischer Arbeitsweise zurückgezogen.

Zum Einbringen bzw. Einziehen einer Filterstrang-Einzieheinheit mit besonders großem Durchmesser ist es vorteilhaft, die ursprüngliche Bohrung mehrmals mit verschieden großen Aufweitköpfen schrittweise aufzuweiten. Wann das nötig ist, wird im wesentlichen durch die Bodeneigenschaften, die Bohrtechnik und die Aufgabe der Horizontalfilterbrunnen und Drainageleitungen vorgegeben.

Um ein schnelles Verlegen der Filterstränge zu ermöglichen, ist es vorteilhaft, die Filterstrang-Einzieheinheit direkt am Aufweitkopf anzukoppeln, wodurch die Filterstrang-Einzieheinheit während des Aufweitvorgangs in die aufgeweitete Bohrung eingezogen wird.

Der Durchmesser des Aufweitkopfes sollte größer als der Durchmesser der Fiiterstrang-Einzieheinheit sein, um möglichst geringe Reibungskräfte beim Einziehen in die Bohrung zuzulassen.

Wenn der letzte Aufweitvorgang erfolgt, wird mit dem Aufweitkopf die Filterstrang-Einzieheinheit im Gefolge des hydraulisch-mechanisch arbeitenden Aufweitkopfes eingezogen. In der Eintrittsöffnung kann der Filterstrang obertätig fixiert werden, und das Schutzrohr der Filterstrang-Einzieheinheit kann zur anderen Öffnung herausgezogen werden. Dabei entsteht zwischen Filterstrang und Bohrlochwandung ein Ringraum, der durch Versturz geschlossen wird, was günstige Auswirkungen auf die Durchlässigkeit des Brunnenumfeldes hat. Aus diesem Grund kann es besonders vorteilhaft sein, einen Aufweitkopfdurchmesser zu wählen, der erheblich größer ist als der des Schutzrohres.

Damit beim Herausziehen des äußeren Hüllrohres (Schutzrohres) der eigentliche Filterleitungsaufbau nicht mit herausgezogen wird, ist es vorteilhaft, den inliegenden Filterstrang bzw. das inliegende Filterrohr eigens oberirdisch zu fixieren.

Zur Durchführung des Verfahrens dient ein Arbeitsmittel mit einem äußeren Hüllrohr, das einen darin liegenden Filterrohr umschließt, wobei vorteilhafterweise der Zwischenraum zwischen Fiiterstrang und äußerem Hüllrohr durch eine Filtersand- und/oder Filterkiesfüllung (Filterkiesmantel) gefüllt ist. Ein solcher Aufbau ermöglicht es, daß die Verteilung der Filterkiesfüllung und der darin eingebetteten Filterleitung den Erfordernissen entsprechend optimal aufgebaut ist. Zudem wird ermöglicht, daß der Aufbau des Filterstrangs vorgefertigt werden kann und dadurch fehlerhafte Stellen vermieden werden. Diese Anordnung ist auch deshalb sehr vorteilhaft, da der gesamte Aufbau des zu verlegenden Filterstrangaufbaus vorkontrolliert werden kann.

Je nach Bodengegebenheiten ist eine Mantelung des Filterrohres mit Filterkies oder Filtersand nicht nötig und es ist dann vorteilhaft, um Kosten einzusparen, nur ein Filterrohr im äußeren Hüllrohr in die Bohrung einzuziehen.

Der Filterstrangaufbaub kann optimal an die hydrologischen Gegebenheiten angepaßt werden. Zum einen ist es möglich, die Füllung zwischen Filterrohr und Bohrwandung mit unterschiedlich grobkörnigen Filtermaterialien vorzunehmen, zum anderen kann diese Füllung genau in vorbestimmter Weise aufgebaut sein und läßt sich auch vor dem Einbau kontrollieren.

Aufgrund der Fertigung des gesamten Filterstrangs vor Einbau sind weitere Variationen dieses Aufbaus zur optimalen Anpassung an die geologischen Gegebenheiten möglich.

So kann es aus verfahrenstechnischen und ökonomischen Gründen vorteilhaft sein, die eigentliche Filterleitung nur in Teilabschnitten der Gesamtbohrung einzubringen.

Durch den Aufbau und der Vorfertigung des gesamten Filterstrangs ist ein DIN-gerechter Aufbau möglich. Aufgrund der Vorfertigung des Filterstrangs können optimale Brunnenleistungen erreicht werden.

Bei dem Arbeitsmittel sind alle bisher bekannten Filterleitungsmaterialien anwendbar. So können neben herkömmlichen und im Brunnenbau bereits üblichen Filterrohren jeder Art Vliese, Textilien und Membranen mit einem inneren Stützrohr im Filterstrang eingebaut werden. Das Filterrohr selbst kann ein porös selbsttragendes Kunststoff-Filterrohr sein, welches aus PE, PVDF, PTFE, PT, PU, PVC oder dergleichen, besteht. Ebenso können poröse selbsttragende Keramik- oder Sintermetall-Filterrohre oder aus anderen porösen selbsttragenden Materialien bestehende Filterrohre im Filterstrang eingesetzt werden.

Der Aufbau der einzelnen Filterstränge kann vorteilhafterweise auch an die geologisch-verfahrenstechnischen Anforderungen hinsichtlich der Geometrie angepaßt werden. Hierzu wird die Filterstrangeinheit falls nötig unterschiedlich flexibel aufgebaut, so daß verschiedenste Krümmungsradien der Horizontalfilterbrunnen oder der Drainageleitungen des Bohrlochs möglich sind.

Vorteilhafterweise ist das äußere Hüllrohr aus einem glatten, stabilen Kunststoff wie Polyethylen oder dergleichen gefertigt, wodurch das Einführen der Filterstrang-Einzieheinheit in die Bohrung erleichtert wird. Durch das Arbeitsmittel wird der empfindliche Filterstrang vor Bohrspülungs- und Borschmand-Zutritten geschützt und das äußere Hüllrohrentlastet den eigentlichen Filterstrang und hält ihn frei von Reibungskräften.

Das erfindungsgemäße Verfahren kann völlig neue Bereiche erschließen, da die einzelnen Filterstränge in Anzahl, Durchmesser und Längen bis 500 m (bei entsprechender Bohrtechnik auch länger) variiert werden können. Ebenso sind sehr geringe Durchmesser der einzelnen Filterleitungen möglich, die mit den bekannten Verfahren nicht erreicht wurden.

Bei dem erfindungsgemäßen Verfahren ist es zudem möglich, den jeweiligen Abschnitt des Filterstrangs bzw. des Filterrohres mittels Einfahren einer Kamera schon während des Einziehvorgangs zu kontrollieren. Eventuell auftretende Beschädigungen am Filterstrang beim Einziehen sind somit sofort festzustellen und möglicherweise zu beseitigen.

Im folgenden ist zur weiteren Erläuterung und zum besseren Verständnis der Erfindung ein Ausführungsbeispiel eines nach dem erfindungsgemäßen verfahren gebauten Horizontalfilterbrunnens sowie dem Arbeitsmittel zur Durchführung dieses Verfahrens unter Bezugnahme auf die beigefügten Zeichnungen näher beschrieben und erläutert. Es zeigt:
- Fig. 1: eine beispielhafte Unterfahrung,
- Fig. 1a: eine schematische Darstellung des Vorantreibens einer Bohrung,
- Fig. 2: eine Draufsicht mit beispielhaften Verlaufsformen der Brunnen und Drainagen,
- Fig. 3: eine schematische Darstellung eines beispielhaften Aufweitvorgangs, und
- Fig. 4: einen schematischen Schnitt senkrecht zum Filterstrang (Ausführungsbeispiel) mit noch ungezogenem Schutzrohr.

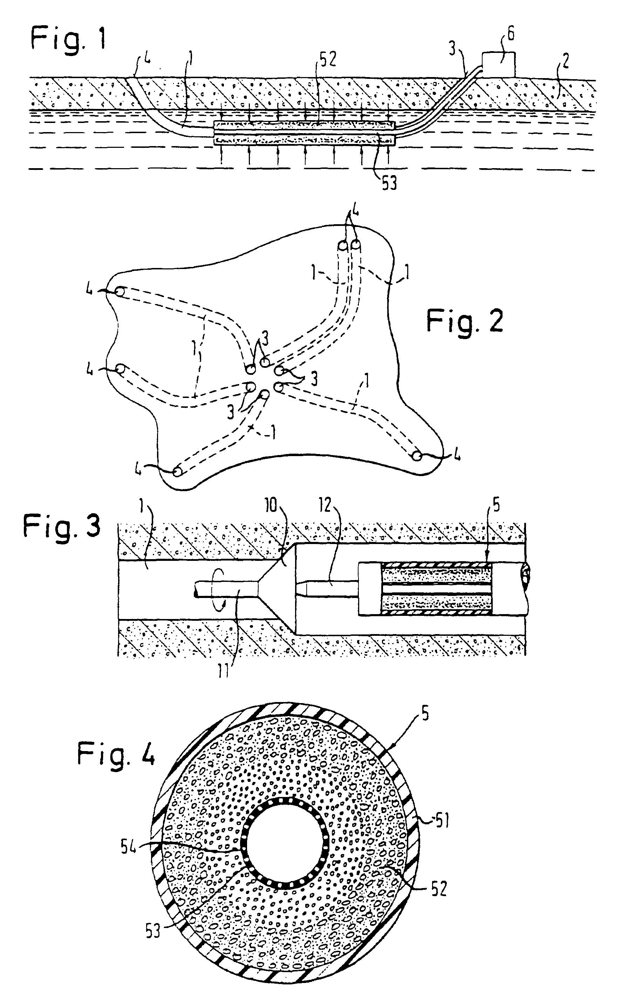

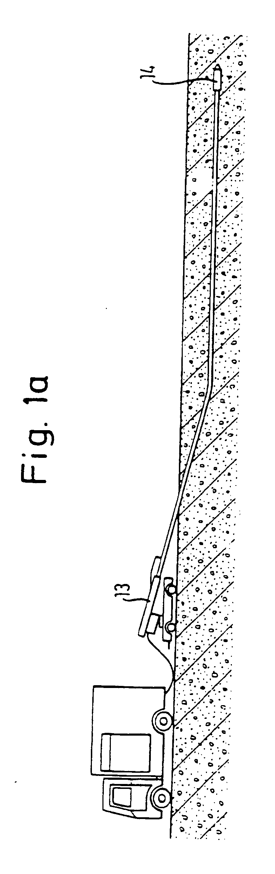

Wie aus Fig. 1 und 2 hervorgeht, umfaßt ein nach dem erfindungsgemäßen Verfahren gebauter Horizontalfilterbrunnen eine oder mehrere, leicht oder stark gekrümmte Bohrungen 1, die sich von einem zentralen Standort aus fächerförmig, in parallel oder anders in verschiedene oder dieselben Bodenschichten 2 erstrekken. Jede Einzelbohrung 1 hat eine Eintrittsöffnung 3 und eine Austrittsöffnung 4, durch welche die Filterstrang-Einzieheinheit 5 eingezogen wird. Der eigentliche Filterstrang 52, 53 liegt dabei unter dem Pegel des Grundwassers in der ungesättigten Zone oder im Stauwasser. An der Oberfläche steht eine Entnahmevorrichtung 6, in dem die zur Förderung des Grundwassers, des Stauwassers oder der Bodenluft dienenden Pumpen Sauger, Vakuumerzeuger oder ähnliches untergebracht sind. Das Filterrohr 53 ist hierzu zu den über und unter der zu bewirtschaftenden Bodenschicht liegenden Abschnitten dicht verschlossen und hat nur innerhalb der zu bewirtschaftenden Bodenschichten der Bohrung Durchlässigkeiten durch Öffnungen, Schlitze, Poren 54 oder ähnliches im Filterrohr 53, durch die das Grundwasser, Stauwasser oder die Bodenluft einströmen können. Die nicht bewirtschafteten Abschnitte sind, wie im Brunnenbau üblich, mit Vollrohren anstelle des Filterstranges 52, 53 ausgebaut.

In Fig. 3 ist erkennbar, daß der Aufweitkopf 10 am Bohrgestänge 11 angekoppelt ist. Hinter dem Aufweitkopf 10 ist über eine Verbindung 12 die Filterstrang-Einzieheinheit 5 mit dem Aufweitkopf 10 verbunden.

Aus der Fig. 4 ist ersichtlich, daß die Filterstrang-Einzieheinheit ein äußeres Hüllrohr 51, eine unterschiedlich körnige Füllung 52 und ein Filterrohr 53 umfaßt. Der eigentliche Filterstrang besteht aus der Filterkiesfüllung 52 und dem Filterrohr 53.

Das erfindungsgemäße Verfahren zum Einbau von unterirdischen Sammelleitungen 53 wird im folgenden erläutert.

Wie aus Fig. 1a ersichtlich, wird mit einem Bohrgerät 13 ein Bohrkopf 14 unter Bildung einer Eintrittsöffnung 3 in den Boden vorangetrieben. Während des gesamten Bohrvorgangs wird der Bohrkopf 14 über ein Ortungsgerät geortet und den Erfordernissen entsprechend ferngesteuert in die jeweilig gewunschte Richtung gesteuert. Die Bohrung wird bis zu einer Austrittsöffnung 4 geführt, an der der Bohrkopf 14 durch einen Aufweitkopf 10 ersetzt wird. An dem am Bohrgestänge 11 angebrachten Aufweitkopf 10 ist eine Verbindung 12 angeordnet, an dem die vorgefertigte Filterstrang-Einzieheinheit 5 angekoppelt ist. Nun wird das Bohrgestänge 11 zur Eintrittsöffnung 3 hin zurückgezogen, wobei sich das Bohrgestänge 11 rotierend mit Wasserdruckstrahlen mit dem Aufweitkopf 10 durch das Bohrloch 1 bewegt, und dadurch die Bohrung 1 in ihrem Durchmesser durch den Aufweitkopf 10 vergrößert wird. Gleichzeitig mit diesem Aufweitvorgang wird die Filterstrang-Einzieheinheit 5 bis zur Eintrittsöffnung 3 eingezogen. Während des Aufweitvorgangs wird eine den Bodenerfordernissen entsprechend zusammengesetzte Bohrsuspension durch die am Aufweitkopf 10 angebrachte Düse oder Düsen in den aufgelockerten Boden der Bohrwandung 1 eingebracht. Durch diese Bohrsuspension werden die Reibung am äußeren Hüllrohr 51 der Filterstrang-Einzieheinheit 5 sowie der nötige Kraftaufwand zum Zurückziehen des Bohrgestänges 11 und der Filterstrang-Einzieheinheit 5 verringert und zusätzlich das Bohrloch 1 stabilisiert.

Bei dem Aufweitvorgang wird die Bohrwandung des Bohrlochs 1 aufgerissen und kann auf das äußere Hüllrohr 51 der Filterstrang-Einzieheinheit 5 fallen, falls Bodenverhältnisse, Bohrtechnik im Detail und Spülungsparameter dies zulassen. Hierdurch wird eine gewünschte höhere Permeabilität des Bodens im Bereich der Bohrwandung erreicht.

Nachdem die Filterstrang-Einzieheinheit 5 an der Eintrittsöffnung 3 angelangt ist, wird das Filterrohr 53 oberirdisch fixiert. Dann wird von der anderen Öffnung 4 aus das äußere Hüllrohr 51 aus dem Bohrloch 1 herausgezogen.

Zur Erniedrigung der Reibungskräfte beim Herausziehen des äußeren Hüllrohres 51 aus der Bohrung 1 können als Filterfüllung 52 auch Kunststoffgranulate bestimmter Korngröße eingesetzt werden. Ebenso ist es möglich, von der Eintrittsöffnung 3 aus Wasser unter Druck in das Filterrohr 53 einzuleiten, welches durch die Öffnungen 54 im Filterrohr 53 unterirdisch wieder heraustritt und zusätzlich die Reibung zwischen Filterstrang 52, 53 und äußerem Hüllrohr 51 verringert.

Die durch Bohrungen 1 und darin eingezogenen Filtersträngen 52, 53 gebildeten Horizontalfilterbrunnen können auf verschiedene Weise betrieben werden.

Es ist denkbar, eine der Öffnungen 3, 4 dicht zu verschließen, wodurch ein Vakuumbetrieb der einzelnen Bohrung 1 bzw. der Filterstränge 52, 53 möglich ist. Andere Betriebsweisen wie Schwerkraftentwässerung und kombinierte Bodenluft-Absaugung und Entwässerung sowie auch Versickerungen und Verpressungen können ebenfalls durchgeführt werden.

## Patentansprüche

1. Verfahren zum Verlegen von unterirdischen Sammelleitungen für Flüssigkeiten und Gase, insbesondere zum Bau von Horizontalfilterbrunnen und Drainageleitungen, mit folgenden Verfahrensschritten:
- Einbringen mindestens einer Bohrung (1) in vorbestimmte Bodenschichten, wobei die Bohrung jeweils eine Eintrittsöffnung (3) und eine Austrittsöffnung (4) besitzt und
- Einziehen einer Filterstrang-Einzieheinheit (5), bestehend aus Filterstrang (52, 53) und äußerem Hüllrohr (51) in die jeweilige Bohrung (1); wobei
- die Filterstrang-Einzieheinheit (5) an einem Aufweitkopf (10) angekoppelt ist;
- beim Zurückziehen des Aufweitkopfes zur Eintrittsöffnung hin gleichzeitig die Filterstrang-Einzieheinheit in die Bohrung eingezogen wird; und
- der Durchmesser des verwendeten Aufweitkopfes größer dem Durchmesser der Filterstrang-Einzieheinheit ist;
- Entfernen des äußeren Hüllrohres (51) der Filterstrang-Einzieheinheit (5); wobei
- die Bohrsuspension keine zusätzlichen Permeabilitätsverringerungen im Boden erzeugt.

2. Verfahren nach Anspruch 1,
**dadurch gekennzeichnet, dass**
die Bohrung (1) mittels eines verlaufgesteuerten Bohrungsverfahren vorangetrieben wird.

3. Verfahren nach Anspruch 1 oder 2,
**dadurch gekennzeichnet, dass**
ein voll steuerbarer, fernlenkbarer Bohrkopf (14) zum Bohren verwendet wird.

4. Verfahren nach Anspruch 1,
**dadurch gekennzeichnet, dass**
die Bohrung mehrmals mit verschieden großen Aufweitköpfen schrittweise weiter aufgeweitet wird, wobei mit dem letzten Aufweitschritt die Filterstrang-Einzieheinheit angeschlossen wird.

5. Verfahren nach Anspruch 1,
**dadurch gekennzeichnet, dass**
der innere Filterstrang der Filterstrang-Einzieheinheit bei Zug des äußeren Hüllrohrs oberirdisch fixiert wird.

6. Verfahren nach einem oder mehreren der vorhergehenden Ansprüche,
**dadurch gekennzeichnet, dass**
die zum Bohren verwendete Bohrsuspension, die auch reines Wasser sein kann, gewässerneutral und biologisch abbaubar ist.

7. Verfahren nach einem oder mehreren der vorhergehenden Ansprüche,
**dadurch gekennzeichnet, dass**
die Länge einer Bohrung (1) bis 500 m oder mehr beträgt.

8. Verfahren nach einem oder mehreren der vorhergehenden Ansprüche,
**dadurch gekennzeichnet, dass**
beim Ziehen des Hüllrohrs (51) aus der Bohrung gleichzeitig Wasser durch den inneren Filterstrang (52, 53) unter Druck in die Bohrung (1) gepresst wird.

9. Verfahren nach einem oder mehreren der vorhergehenden Ansprüche,
**dadurch gekennzeichnet, dass**
die Bohrung (1) eine beliebig gekrümmte Bahn beschreibt.

10. Verfahren nach einem oder mehreren der vorhergehenden Ansprüche,
**dadurch gekennzeichnet, dass**
die Bohrung (1) zu vorbestimmten Stellen vorangetrieben wird.

11. Verfahren nach einem oder mehreren der vorhergehenden Ansprüche,
**dadurch gekennzeichnet, dass**
in den inneren Filterstrang (53) zur Kontrolle des Einbauzustands eine Kamera eingefahren wird.

## Claims

1. Method of laying subterranean supply pipes for liquids and gases, particularly for the construction of horizontal filtering wells and drainage pipes, with the following method steps:
- introduction of at least one bore (1) into predetermined ground layers, wherein the bore respectively has one entry opening (3) and one exit opening (4), and
- drawing of a filter train insertion unit (5), consisting of filter train (52, 53) and outer cladding tube (51), into the respective bore (1); wherein
- the filter train insertion unit (5) can be coupled to an expander head (10);
- upon withdrawal of the expander head towards the entry opening, the filter train insertion unit is simultaneously drawn into the bore; and
- the diameter of the expansion head used is greater than the diameter of the filter train insertion unit;
- removal of the outer cladding tube (51) of the filter train insertion unit (5); wherein
- the boring suspension creates no additional permeability reductions in the ground.

2. Method according to claim 1, **characterised in that** the bore (1) is driven by means of a progression-controlled boring method.

3. Method according to claim 1 or 2, **characterised in that** a fully controllable, remotely-guided drill head (14) is used for boring.

4. Method according to claim 1, **characterised in that** the bore is expanded a number of times step by step with different size expansion heads, wherein the filter train insertion unit is connected during the last expansion step.

5. Method according to claim 1, **characterised in that** the inner filter train of the filter train insertion unit is fixed above ground when drawing the outer cladding tube.

6. Method according to one or more of the preceding claims, **characterised in that** the boring suspension used for boring, which can also be clean water, is neutral in water and biologically degradable.

7. Method according to one or more of the preceding claims, **characterised in that** the length of a bore (1) is 500 m or more.

8. Method according to one or more of the preceding claims, **characterised in that** when withdrawing the cladding tube (51) from the bore, water is simultaneously pressed through the inner filter train (52, 53) under pressure into the bore (1).

9. Method according to one or more of the preceding claims, **characterised in that** the bore (1) describes any randomly curved path.

10. Method according to one or more of the preceding claims, **characterised in that** the bore (1) is advanced to predetermined positions.

11. Method according to one or more of the preceding claims , **characterised in that** a camera is introduced in to the inner filter train (53) for monitoring the state of assembly.

## Revendications

1. Procédé de pose de conduites de collecte souterraines pour des liquides et des gaz, notamment pour la construction de puits filtrants horizontaux et de conduites de drainage, comprenant les étapes de procédé suivantes :
- réalisation d'au moins un trou de forage (1) dans des couches du sol prédéterminées, chaque trou de forage possédant un orifice d'entrée (3) et un orifice de sortie (4), et
- insertion par traction, dans le trou (1) considéré, d'une unité insérable de boyau filtrant (5), constituée d'un boyau filtrant (52, 53) et d'un tube enveloppe extérieur (51) ; où
- l'unité insérable de boyau filtrant est couplée à une tête d'élargissement (10) ;
- lorsque la tête d'élargissement est ramenée vers l'orifice d'entrée, on procède simultanément à l'insertion par traction de l'unité insérable de boyau filtrant dans le trou de forage ; et
- le diamètre de la tête d'élargissement utilisée est supérieur au diamètre de l'unité insérable de boyau filtrant ;
- enlèvement du tube-enveloppe extérieur (51) de l'unité inséparable de boyau filtrant (5) ; où
- la suspension de forage n'engendre pas de réductions de perméabilité supplémentaires dans le sol.

2. Procédé selon la revendication 1, **caractérisé en ce que** le trou de forage (1) est réalisé par avancement au moyen d'un procédé de forage à tracé commandé.

3. Procédé selon la revendication 1 ou 2, **caractérisé en ce que** l'on utilise pour le forage une tête de forage (14) téléguidée, à commande totalement automatique.

4. Procédé selon la revendication 1, **caractérisé en ce que** le trou de forage est élargi davantage plusieurs fois, par étapes, à l'aide de différentes têtes d'élargissement, l'unité insérable de boyau filtrant étant raccordée durant la dernière étape d'élargissement.

5. Procédé selon la revendication 1, **caractérisé en ce que** le boyau filtrant intérieur de l'unité insérable de boyau filtrant est fixé au-dessus du niveau du sol lors du retrait par traction du tube-enveloppe extérieur.

6. Procédé selon l'une ou plusieurs des revendications précédentes, **caractérisé en ce que** la suspension de forage utilisée pour le forage, qui peut également être constituée par de l'eau pure, est neutre pour les eaux et biodégradable.

7. Procédé selon l'une ou plusieurs des revendications précédentes, **caractérisé en ce que** la longueur d'un trou de forage (1) peut aller jusqu'à 500 m ou plus.

8. Procédé selon l'une ou plusieurs des revendications précédentes, **caractérisé en ce que** lors de l'extraction du tube-enveloppe (51) du trou de forage, on envoie simultanément de l'eau sous pression au travers du boyau filtrant intérieur (52, 53), dans le trou de forage (1).

9. Procédé selon l'une ou plusieurs des revendications précédentes, **caractérisé en ce que** le trou de forage (1) décrit un tracé d'une courbure quelconque.

10. Procédé selon l'une ou plusieurs des revendications précédentes, **caractérisé en ce que** l'avancement du trou de forage (1) est réalisé vers des endroits prédéterminés.

11. Procédé selon l'une ou plusieurs des revendications précédentes, **caractérisé en ce que** l'on introduit une caméra dans le boyau filtrant intérieur (53) pour le contrôle de l'état de pose.
